# EUROPÄISCHE PATENTSCHRIFT

(11) **EP 1 423 822 B1**
(45) Veröffentlichungstag und Bekanntmachung des Hinweises auf die Patenterteilung: **15.12.2004**
(21) Anmeldenummer: 02797936.8
(22) Anmeldetag: 29.08.2002
(51) Int. Cl.: G06K 9/56, G06T 5/20

(54) **VERFAHREN UND VORRICHTUNG ZUM UNTERSUCHEN EINES OBJEKTS**
METHOD AND DEVICE FOR EXAMINING AN OBJECT
PROCEDE ET DISPOSITIF PERMETTANT L'EXAMEN D'UN OBJET

(30) Priorität: 05.09.2001 DE 10143522
(43) Veröffentlichungstag der Anmeldung: 02.06.2004
(73) Patentinhaber: FRAUNHOFER-GESELLSCHAFT ZUR FÖRDERUNG DER ANGEWANDTEN FORSCHUNG E.V., 80636 München (DE)
(72) Erfinder: HASSLER, Ulf, 91560 Heilsbronn (DE); KOSTKA, Günther, 91056 Erlangen (DE); SPINNLER, Klaus, 91056 Erlangen (DE); WENZEL, Thomas, 91083 Baiersdorf (DE)
(74) Vertreter: Schoppe, Fritz, Dipl.-Ing.
(86) Internationale Anmeldenummer: PCT/EP2002/009644
(87) Internationale Veröffentlichungsnummer: WO 2003/023699

(56) Entgegenhaltungen:
- US-A- 5 073 955
- US-A- 5 243 668
- US-A- 5 594 767
- US-B1- 6 227 725
- RAMPONI G: "A cubic unsharp masking technique for contrast enhancement" SIGNAL PROCESSING. EUROPEAN JOURNAL DEVOTED TO THE METHODS AND APPLICATIONS OF SIGNAL PROCESSING, ELSEVIER SCIENCE PUBLISHERS B.V. AMSTERDAM, NL, Bd. 67, Nr. 2, 18. Juni 1998 (1998-06-18), Seiten 211-222, XP004129652 ISSN: 0165-1684
- SCOGNAMIGLIO G ET AL: "A rational unsharp masking method for TV applications" IMAGE PROCESSING, 1999. ICIP 99. PROCEEDINGS. 1999 INTERNATIONAL CONFERENCE ON KOBE, JAPAN 24-28 OCT. 1999, PISCATAWAY, NJ, USA,IEEE, US, 24. Oktober 1999 (1999-10-24), Seiten 247-251, XP010368704 ISBN: 0-7803-5467-2

## Beschreibung

Die vorliegende Erfindung bezieht sich auf die automatische Untersuchung von Objekten und insbesondere auf ein Verfahren und eine Vorrichtung zum Untersuchen eines Objekts hinsichtlich Informationen, die mittels einer reliefartigen Struktur an dem Objekt vorhanden sind.

Reliefartige Informationen, wie z. B. Schriftzeichen, Symbole, Zahlen, Strichcodes etc., die auf Objekten mit beispielsweise diffus reflektierenden Oberflächen vorhanden sind, werden dort aufgebracht, um Informationen über das Objekt bzw. Informationen zur Verwendung des Objekts zu enthalten. Ein Anwendungsfall ist die Erkennung von Schriften auf Gußteilen, wie z. B. Rädern, zur Erkennung des Produkttyps oder des Gießwerkzeugs. Ein weiterer Anwendungsfall ist beispielsweise die Erfassung einer Identifikation, Laufrichtung, etc. als Beispiel von vielen Informationen, die mittels Ziffern, Buchstaben, Symbolen etc. auf einer Seitenwand eines Fahrzeugreifens aufgebracht sind. Diese Informationen sind aus Robustheitsgründen nicht z. B. mit Farbe auf der Reifenseitenwand aufgezeichnet, sondern mittels einer reliefartigen Struktur, die sich entweder von der Oberfläche des Reifens weg erstreckt und damit vorstehend ist, oder in den Reifen hinein erstreckt, d. h. als Ausnehmung in der Reifenoberfläche vorhanden ist. Andere reliefartige Strukturen stehen von der Reifenfläche vor und umfassen ferner eine Ausnehmung in der Reifenoberfläche. Eine solche reliefartige Struktur ist beispielsweise dann vorhanden, wenn ein Buchstabe auf der Reifenoberfläche durch eine schmale vorstehende Umrandung auf der Reifenseitenfläche markiert ist.

Eine reliefartige Struktur ist eine Struktur, deren "Höhe" sich von der Höhe der umgebenden Oberfläche unterscheidet, und zwar entweder in positiver Richtung oder in negativer Richtung.

Eine reliefartige Struktur ist ferner dadurch bestimmt, daß sich der Höhengradient bezüglich einer Bezugshöhe nicht relativ langsam ändert, wie es bei der Krümmung der Reifenseitenwand der Fall ist, sondern daß der Gradient einen relativ abrupten Verlauf hat. Eine vorstehende reliefartige Struktur auf einer Reifenoberfläche wird daher, wenn sie in radialer Richtung betrachtet wird, folgenden Gradientenverlauf haben. Die an die reliefartige Struktur angrenzende Reifenoberfläche wird einen relativ kleinen Gradienten haben, der die Krümmung der Reifenseitenwand wiedergibt. Dann, wenn die reliefartige Struktur beginnt, wird der Höhengradient sehr schnell auf einen großen Wert ansteigen. Dieser "große" Wert wird endlich sein, wenn die reliefartige Struktur eine schräge seitliche Begrenzung hat. Wenn die reliefartige Struktur jedoch nahezu senkrecht von der Oberfläche des Reifens vorsteht, wird der Gradient im Rahmen der Rechengenauigkeit nahezu unendlich werden. Dann, wenn das "Plateau" der reliefartigen Struktur erreicht wird; wird der Gradient wieder sehr schnell auf sehr kleine Werte bzw. Werte von nahezu Null abnehmen, um dann wieder, wenn die "andere Seite" der reliefartigen Struktur erreicht wird, sehr schnell auf betragsmäßig große Werte, jedoch mit umgekehrten Vorzeichen, anzusteigen. Dieser betragsmäßig große negative Wert wird beibehalten, bis die "Anschlußstelle" der reliefartigen Struktur und der umgebenden Oberfläche der Reifenseitenwand erreicht wird. An dieser Anschlußstelle wird der Gradient wieder sehr schnell auf relativ kleine Werte nahe Null abnehmen, um wieder eine eventuell vorhandene Krümmung der Reifenseitenwand, nun jedoch ohne reliefartige Struktur, anzuzeigen.

Eine besondere Schwierigkeit bei der Detektion solcher reliefartig aufgebrachten Strukturen, die Informationen tragen, liegt darin, daß die Strukturen, die die Informationen beinhalten, wie z. B. Schriftzeichen, Symbole etc., und der die Zeichen umgebende Hintergrund häufig von gleicher Färbung ist. Deshalb ist der Kontrast zwischen Zeichen und Hintergrund bei einer reinen optischen Aufzeichnung äußerst gering, und eine Erkennung mit rein optischen zweidimensionalen Bildverarbeitungssystemen ist nur mit spezieller, meist gerichteter Beleuchtung möglich. Die Kennung von Zeichen erfolgt hierbei indirekt durch Analyse des von den Reliefs erzeugten Schattens. Dieses Konzept ist weiterhin stark abhängig von der präzisen geometrischen Anordnung, aufgrund derer die Erzeugung des Schattenwurfes geschieht. Auf gewölbten oder flexiblen Oberflächen, z. B. komplexen Gußteilen oder Gummireifen, scheitert diese Methode der optischen Erfassung mittels gerichteter Beleuchtung, oder sie ist nur in einem kleinen Bereich möglich, auf den die Kamera "blickt".

Das US Patent US 5 073 955 offenbart ein Verfahren zur Erkennung von Zeichen, die einem ebenen metallenen Werkstück eingeprägt sind, auf der Basis eines Grauwertbildes. Um das genannte Kontrastproblem zu lösen, wird ein (Kompass-)Gradientenfilter eingesetzt.

Der Artikel "A cubic unsharp masking technique for contrast enhancement" von G. Ramponi, Signal Processing, Bd. 67, Nr. 2, S. 211-222, Elsevier Science Publishers, Juni 1998, offenbart ein wohlbekanntes und in vielen Bereichen eingesetztes Verfahren zur Kontrastverstärkung in Grauwertbildern, das sogenannte "Unsharp Masking", das darin besteht, aus dem Originalbild ein unscharfes Bild zu bestimmen (zB durch Tiefpassfilterung) und dieses von jenem abzuziehen. Eine Tiefpassfilterung hebt Bereiche mit geringen "Höhenänderungen" gegenüber solchen mit starken Höhenänderungen hervor.

Bei der Herstellung unterschiedlichster technischer Bauteile wird bei einem Produktionsprozeß Information in die Oberfläche des Bauteils eingeformt. Beispielsweise werden bei der Herstellung von Leichtmetallrädern eines bestimmten Typs meist mehrere Gießwerkzeuge, die in der Technik auch als Kokillen bekannt sind, verwendet, um gleichzeitig mehrere Räder desselben Typs gießen zu können. Um eine eindeutige Identifikation des Produktes in den weiteren Prozeßschritten zu gewährleisten und eine Stückzahlerfassung getrennt nach Gießmaschine durchführen zu können, wird eine Typbezeichnung und Kokillenidentifikation in das Gießwerkzeug eingraviert. Dies erzeugt auf dem Gußrohling erhabene Schriften oder Reliefe. Diese erlauben einer menschlichen Bedienperson an einer Weiterbearbeitungsstation, die Herkunft des Rades zu identifizieren und beispielsweise eine Stückzahlerfassung durchzuführen.

Bisher wird an den Bearbeitungs- und Prüfstationen, die manuell bedient werden, die Identifizierung durch den jeweiligen Bediener durchgeführt. Im Zuge der Automatisierung von Bearbeitungszentren und Prüfeinrichtungen muß auch die Erkennung solcher Identifikationsmerkmale automatisiert werden. Ansätze, gegossene Merkmale mit Standardkameras zu erkennen, stoßen auf die oben genannten Schwierigkeiten, insbesondere bei Leichtmetallrädern, bei denen die Merkmale im Felgenbett aufgebracht sind, das sich zum einen durch eine stark gekrümmte Oberfläche in Laufrichtung des Rades auszeichnet, und das zum anderen auch quer dazu unterschiedlich strukturiert sein kann. Eine gleichmäßige flächenhafte Beleuchtung, die an allen aufgebrachten Identifikationsmerkmalen einen übereinstimmenden Schattenwurf erzeugt, der von einer Flächenkamera erfaßt werden kann, ist nur in einem sehr kleinen Bereich möglich.

Der Einsatz von Zeilenkameras erfordert eine Bewegungseinrichtung, die das Rad vor der Kamera dreht. Bei dieser Anwendung ist der Abstand zwischen Kamera und Oberfläche, bzw. Beleuchtung und Oberfläche konstant zu halten, um den Winkel, in dem der Schatten erzeugt und unter dem die Reflexion betrachtet wird, konstant zu halten, um so eine reproduzierbare Erkennung zu erlauben. Wird zur Prüfung der Räder ein automatisches Röntgenprüfsystem eingesetzt, so wird auch der Ansatz verfolgt, die Merkmale im Röntgenbild automatisch zu erkennen und auszuwerten. Dies setzt voraus, daß die Prüfung den Bereich, in dem sich die Merkmale befinden, abdeckt. Dies kann besonders in den Fällen zu Zeitverlust führen, bei denen die Prüfung aufgrund eines detektierten Defekts abgebrochen werden könnte, aber fortgeführt werden muß, weil das Identifikationsmerkmal noch nicht erreicht wurde.

Ein weiteres Beispiel sind Kfz-Reifen, die in der Seitenwange reliefartig eingeformte Information über Hersteller, Typ, Größe, Herstellungsdatum, Laufrichtung etc. tragen. Aufgrund ihrer flexiblen Oberfläche ist die Einhaltung der oben genannten, präzisen geometrischen Anordnung von Kamera, Beleuchtung und Oberfläche praktisch nicht möglich. Ein Systemansatz, der den Reifen durch eine optische Erfassung der Lauffläche und Erkennung von Hersteller aufgebrachter Farbstreifen, sowie der Profilform mittels Bildverarbeitung zu identifizieren versucht, scheitert an praktischen Problemen wie Farbveränderungen durch Verschmutzung, Alterung oder nicht eindeutigen Erkennungsmerkmalen. Für die Realisierung automatisierter Räder-Montagelinien ist jedoch eine robuste und sichere Identifizierung des richtigen und lagerichtigen Reifens und des zugehörigen Rads vor der Montage unabdingbar.

Um eine robuste und gleichzeitig sichere Identifikation der auf dem Objekt mittels reliefartiger Strukturen vorhandenen Informationen zu erreichen, werden daher nach wie vor Personen eingesetzt. Dies widerspricht der gewünschten Automatisierung und führt gleichzeitig zu hohen Personalkosten. Dies ist insbesondere bemerkenswert, da für diesen Zweck auch in weitestgehend automatisierten Montagelinien noch Bedienpersonen nötig sind.

Die Aufgabe der vorliegenden Erfindung besteht darin, ein preisgünstiges und gleichzeitig robustes Konzept zum Untersuchen eines Objekts hinsichtlich Informationen, die mittels einer reliefartigen Struktur an dem Objekt vorhanden sind, zu schaffen.

Diese Aufgabe wird durch ein Verfahren gemäß Patentanspruch 1 oder durch eine Vorrichtung gemäß Patentanspruch 9 gelöst.

Der vorliegenden Erfindung liegt die Erkenntnis zugrunde, daß die reliefartigen Strukturen, die die Informationsträger sind, sich von sonstigen Unebenheiten, Krümmungen etc. dadurch unterscheiden, daß sie abrupte Höhenänderungen der Oberfläche des Objekts samt reliefartiger Struktur aufweisen. Während eine Beule in bzw. auf einer Reifenseitenwand eine relativ kontinuierliche Begrenzung hat, ist dies bei einer reliefartigen Struktur genau nicht der Fall. Sie ist in irgendeiner Weise auf die Oberfläche des Objekts "aufgesetzt", so daß sie anhand ihres charakteristischen Gradientenverlaufs detektiert werden kann. Erfindungsgemäß wird daher eine ursprüngliche Darstellung des Objekts bereitgestellt, um dann die ursprüngliche Darstellung mittels eines Filters zu filtern, um eine gefilterte Darstellung zu erhalten. Das Filter ist erfindungsgemäß so gestaltet, daß es die reliefartige Struktur unterdrückt, so daß eine gefilterte Darstellung des Objekts ohne die reliefartige Struktur erhalten wird. Durch Kombinieren der gefilterten Darstellung mit der ursprünglichen Darstellung beispielsweise mittels einer Subtraktion kann dann eine kombinierte Darstellung des Objekts erreicht werden, in der die reliefartige Struktur dominant vorhanden ist. Alternativ könnte die ursprüngliche Höhendarstellung des Objekts z. B. hochpaßgefiltert werden, um schnelle Höhenänderungen gegenüber langsamen Höhenänderungen zu betonen. In diesem Fall würde das (Tiefpaß-) -Filtern und anschließende Kombinieren der gefilterten Darstellung mit der ursprünglichen Darstellung entfallen. Allgemein wird daher die ursprüngliche Höhendarstellung des Objekts verarbeitet, um unter Verwendung von Höhenänderungen in der ursprünglichen Höhendarstellung die reliefartigen Strukturen zu identifizieren bzw. hervorzuheben.

Schließlich liegt vorzugsweise ein Grauwertbild vor, das sich durch abrupte Graustufenänderungen, die durch die reliefartige Struktur hervorgerufen werden, auszeichnet. Solche Graustufenbilder können nunmehr beispielsweise unter Verwendung bekannter OCR-Techniken (OCR = Optical Character Recogniton = optische Zeichenerkennung) oder anderer bekannter Algorithmen zum Mustervergleich (z. B. Template Matching) verarbeitet werden, um die Informationen zu extrahieren, die durch die reliefartige Struktur gegeben sind.

Das erfindungsgemäße Konzept ist dahingehend vorteilhaft, daß keine menschlichen Bedienpersonen mehr vonnöten sind, um Informationen zu ermitteln, die an dem Objekt mittels reliefartiger Strukturen "angeheftet" sind. Statt dessen kann eine vollautomatische Erfassung mittels einer Höhendarstellung des Objekts und anschließender Bildverarbeitung geschaffen werden.

Hierbei ist es prinzipiell unerheblich, wie die ursprüngliche Höhendarstellung des Objekts gewonnen worden ist. Bevorzugterweise wird ein dreidimensionales Meßverfahren unter Verwendung eines Lichtschnitt-Triangulators, der auch als Linienscanner-Triangulator bekannt ist, eingesetzt. Alternativ können auch Echolotverfahren, Stereosköpieverfahren, Computertomographieverfahren, Ultraschallverfahren, Interferenzverfahren oder auch taktile Verfahren eingesetzt werden, bei denen zur Erfassung der Höhendarstellung eine Berührung des Objekts erforderlich ist.

Die Datengewinnung mittels Linienscanner-Triangulator ist gegenüber den anderen Verfahren dahingehend günstig, daß sie robust gegenüber gewölbten Oberflächen sowie Positioniertoleranzen flexibler Oberflächen, wie z. B. Kraftfahrzeugreifen, bei der Datenerfassung ist. Die geometrischen Daten der Oberflächenform, wie sie eine Höhendarstellung des Objekts beispielsweise umfassen kann, werden dann einer erfindungsgemäßen Bildverarbeitung unterzogen und damit für die Durchführung einer Schrift- oder Symbolerkennung vorbereitet. Insbesondere für die automatische Auswertung werden spezifische Unterschiede der reliefartigen Struktur von der sonstigen Umgebung verwendet, nämlich die scharfe Begrenzung mit abrupten Höhenverläufen für das Schrift- und Markierungsrelief gegenüber einer stetig verlaufenden Höhenkontur der Hintergrundstruktur.

Bevorzugte Ausführungsbeispiele der vorliegenden Erfindung werden nachfolgend Bezug nehmend auf die beiliegenden Zeichnungen detailliert erläutert. Es zeigen:
- Fig. 1: eine erfindungsgemäße Vorrichtung;
- Fig. 2: eine erfindungsgemäße Vorrichtung gemäß einem bevorzugten Ausführungsbeispiel;
- Fig. 3: ein Beispiel für ein Bild mit dominanter reliefartiger Struktur, wie es von der Einrichtung zum Bearbeiten erzeugt wird; und
- Fig. 4: eine bevorzugte Ausführung der Einrichtung zum Bereitstellen der ursprünglichen Höhendarstellung.

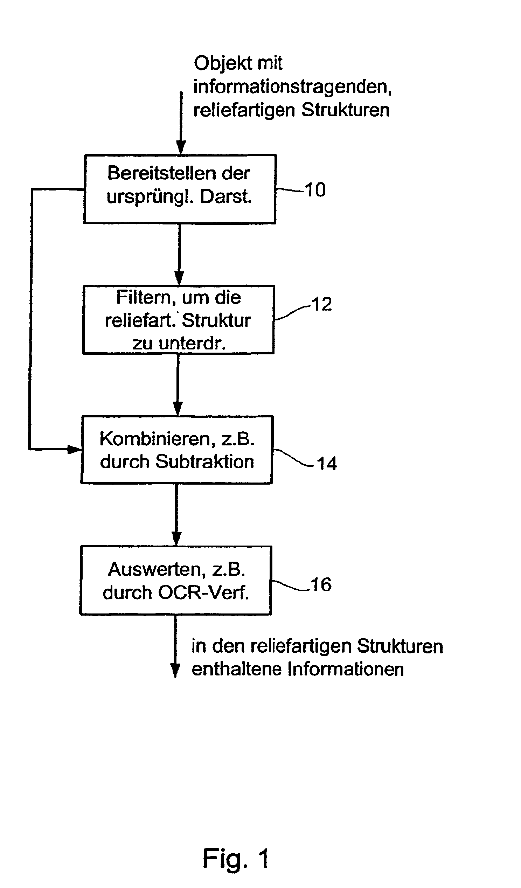

Die erfindungsgemäße Vorrichtung umfaßt wie in Fig. 1 gezeigt zunächst eine Einrichtung 10 zum Bereitstellen der ursprünglichen Höhendarstellung des Objekts, das informationstragende reliefartige Strukturen aufweist. Der Einrichtung 10 nachgeschaltet ist eine Einrichtung 12 zum Filtern der ursprünglichen Höhendarstellung, um die reliefartigen Strukturen zu unterdrücken. Am Ausgang der Einrichtung 12, an der eine gefilterte Darstellung des Objekts vorliegt, ist das Objekt daher ohne reliefartige Struktur abgebildet. Sowohl das Ergebnis der Einrichtung 12 als auch das Ergebnis der Einrichtung 10 werden dann in eine Einrichtung 14 zum Kombinieren der ursprünglichen Darstellung und der gefilterten Darstellung eingespeist, um diese beiden Darstellungen zu kombinieren, und zwar mit dem Ziel, daß in einer kombinierten Darstellung am Ausgang der Einrichtung 14 die reliefartige Struktur dominant vorhanden ist. Anstatt der Einrichtungen 12 und 14 könnte jedoch auch die ursprüngliche Darstellung z. B. mittels eines Hochpaßfilters gefiltert werden, derart, daß schnelle Höhenveränderungen gegenüber langsamen Höhenveränderungen hervorgehoben werden, um z. B. einen Graustufenkontrast in der Objektdarstellung zu verbessern, derart, daß Algorithmen zur optischen Zeichenerkennung eingesetzt werden können, wie sie in einer Einrichtung 16 bevorzugterweise vorhanden sind.

Am Ausgang der Einrichtung 16 werden dann die Informationen, die in den reliefartigen Strukturen enthalten sind, ausgegeben.

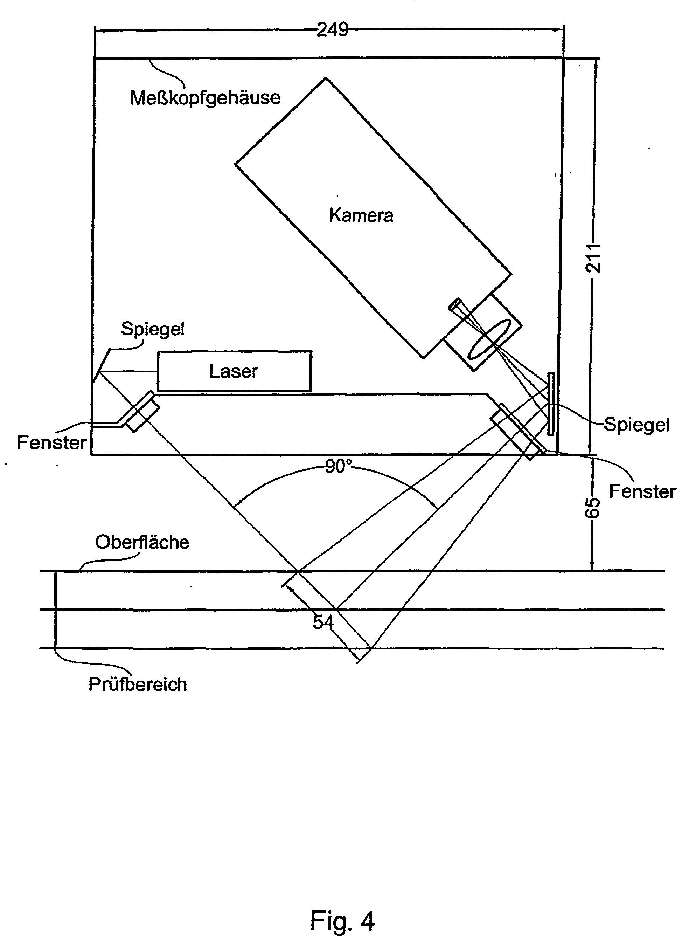

Im nachfolgenden wird anhand von Fig. 4 eine bevorzugte Ausführung der Einrichtung 10 zum Bereitstellen der ursprünglichen Höhendarstellung beschrieben, wobei die Bemaßungen in mm angegeben sind.

Ausgangspunkt ist ein 3D-Meßverfahren, mit dem die geometrische Information der Oberflächenform gewonnen wird. In diesem Ausführungsbeispiel wird das auf dem Triangulationsprinzip beruhenden Lichtschnitt-Verfahren beschrieben. Hier wird zunächst ein Lichtfächerstrahl (z. B. Laser mit spezieller asphärischen Linsenoptik) auf die zu untersuchende Oberfläche gerichtet. Die diffus reflektierte Strahlung wird über ein geeignetes Linsensystem auf eine Sensorfläche projiziert. Bei bekannter Geometrie der Meßanordnung wird aus der Lage der projizierten Linie auf der Sensorfläche die Form der bestrahlten Oberfläche berechnet.

Die Geometrie der Anordnung von Lichtfächerstrahl und Meßkamera sowie die Pixelauflösung der Kamera bestimmen die räumliche Auflösung der Messung in lateraler und vertikaler Richtung. Die Geometrie wird so gewählt, daß sowohl der zu untersuchende Oberflächenbereich auf dem Sensor abgebildet wird als auch eine genügende Höhenauflösung erreicht wird, um die zu detektierenden Markierungen hinreichend darzustellen.

Die Ortsauflösung der Vermessung in tangentialer Richtung ist abhängig von der Bildwiederholrate der Kamera und der Bewegungsgeschwindigkeit (Scangeschwindigkeit) der Oberfläche. Die tangentiale Ortsauflösung liegt typischerweise bei 0,5 mm. Für diese Prüfaufgabe geeignete Sensoren sind am Markt verfügbar. Mittels einer auf den Sensorchip integrierten programmierbaren Rechnerarchitektur wird in dieser eine spaltenweise Bestimmung der Höheninformation durchgeführt, so daß pro aufgenommenem Sensorbild auf dem Meßrechner nur das Auswerteergebnis in Form von einer Zeile übermittelt werden muß.

Fig. 4 zeigt zur Verdeutlichung eine Skizze des Sensorkopfes mit integriertem Laser und Kamera einschließlich der optischen Komponenten. Die Strahlgeometrie ist hier aus Gründen der Platzersparnis über Spiegelelemente geführt. Das Gehäuse ist staubdicht. Die Meßfenster werden mittels Luftspülung von Staub freigehalten. Der mit diesem Aufbau realisierbare Höhenmeßbereich liegt bei 60 mm. Die Höhenauflösung beträgt 65 µm. Die Breite des Meßbereichs beträgt in dieser Konfiguration 80 mm. Je nach Höhe der zu erkennenden Markierung können die Höhenauflösung des Systems verringert und der Höhenmeßbereich sowie die Breite des Meßbereichs vergrößert werden.

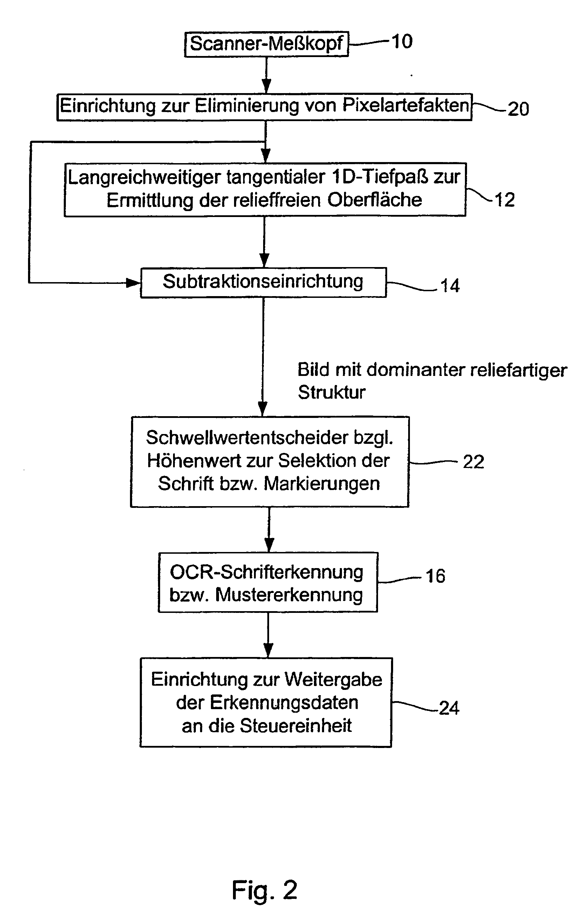

Fig. 2 zeigt eine erfindungsgemäße Vorrichtung, die gegenüber der in Fig. 1 gezeigten Vorrichtung an mehreren Stellen verfeinert ist. Als Einrichtung 10 zum Bereitstellen der ursprünglichen Höhendarstellung wird der in Fig. 4 gezeigte Scanner-Meßkopf eingesetzt. Die Ausgangsdaten des Scanner-Meßkopfsystems werden in eine Einrichtung 20 zum Eliminieren von Pixelartefakten eingespeist, um gestörte Bildpunkte zu detektieren und zu eliminieren, bei denen aus aufnahmetechnischen Gründen keine Höheninformationen ermittelt werden konnten.

Die Einrichtung 12 zum Filtern der nunmehr von Pixelartefakten befreiten ursprünglichen Höhendarstellung wird vorzugsweise als langreichweitiger tangentialer eindimensionaler oder zweidimensionaler Tiefpaß ausgeführt, um eine relieffreie Oberfläche des untersuchten Objekts zu schaffen. Die Grenzfrequenz des Tiefpaßfilters ist derart gewählt, daß langsame Höhenveränderungen nicht unterdrückt werden, jedoch schnelle Höhenänderungen unterdrückt werden, wie sie für typischerweise zu erwartende reliefartige Strukturen auftreten. Die Einrichtung 14 ist in Fig. 2 als Subtraktionseinrichtung ausgeführt, um die Darstellung der relieffreien Oberfläche von der ursprünglichen Höhendarstellung zu subtrahieren, so daß ein Bild des Objekts mit dominanter reliefartiger Struktur erhalten wird, bei dem eine sich langsam ändernde Oberflächenkontur, wie z. B. eine Krümmung, unterdrückt ist.

Bei dem in Fig. 2 gezeigten bevorzugten Ausführungsbeispiel der vorliegenden Erfindung ist eine Einrichtung zur Schwellwertentscheidung bezüglich eines Höhen-Schwellenwerts vorgesehen, um die Schrift bzw. die Markierungen aus dem von der Einrichtung 14 ausgegebenen Bild zu selektieren. Durch diese vorzugsweise vorgesehene Schwellwertentscheidung ist es ferner möglich, nur reliefartige Strukturen mit einer bestimmten Höhe bzw. Tiefe auszuselektieren. Dies ist insbesondere dann von Vorteil, wenn nicht sämtliche beispielsweise auf einer Reifenseitenwand vorhandenen Informationen benötigt werden, sondern vielleicht nur der Pfeil, der die Laufrichtung des Reifens angibt. Durch die durch die Einrichtung 22 bereitgestellte Schwellwertentscheidung kann beispielsweise der Pfeil von einer Aufschrift auf dem Reifen unterschieden werden. Dies ermöglicht es, einfachere Auswertungstechniken zu nehmen. Falls jedoch komplexere OCR-Algorithmen zur Auswertung eingesetzt werden, ist es nicht nötig, einen Schwellwertentscheider zur Selektion von Schrift und Markierungen zu verwenden, da komplexere Auswertungsalgorithmen ohne weiteres z. B. Pfeile von Buchstaben oder Ziffern sicher unterscheiden können.

Die Einrichtung 16 zum Auswerten der Höhendarstellung des Objekts, in der die reliefartigen Strukturen hervorgehoben sind, umfaßt vorzugsweise OCR-Algorithmen zur Erkennung und Interpretation von Symbolen, Schriften, Ziffern etc. Der Einrichtung 16 nachgeschaltet ist ferner eine Einrichtung 24 zur Weitergabe der durch die Einrichtung 16 extrahierten Informationen an eine Steuereinheit, um beispielsweise eine korrekte Reifenpositionierung, eine Stückzahlerfassung etc. auf der Basis der aus den reliefartigen Strukturen extrahierten Informationen durchzuführen.

Die in Fig. 2 dargestellten Einrichtungen 20 bis 24 können durch ein digitales Datenverarbeitungssystem, beispielsweise einen Industrie-PC mit Anzeige und Bedienfunktion ausgeführt werden. Die von dem Scanner-Meßkopf 10 (Fig. 2) ausgegebenen Informationen werden zunächst in das digitale Datenverarbeitungssystem geladen, um eine Detektion der Identifikationsmerkmale bei Unterdrückung der Hintergrundkontur zu erreichen. Hierbei zu berücksichtigende Effekte sind eine eventuelle Krümmung der Oberfläche, die typischerweise keine Informationen trägt, sondern eliminiert werden soll. Die maximale Rechenzeit für die Verarbeitung liegt bei etwa 1 Sekunde.

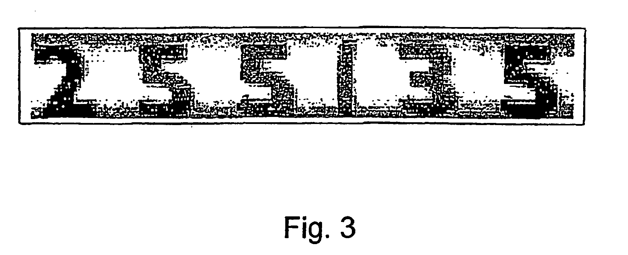

Ein Beispiel für ein Bild mit dominanter reliefartiger Struktur, wie es von der Einrichtung 14 ausgegeben wird, ist in Fig. 3 dargestellt. Hier handelt es sich um ein von Störungen weitestgehend befreites, kontrastreiches Grauwertbild, in dem die gewonnenen Höheninformationen der reliefartigen Struktur in Grauwerte umgesetzt sind. Ein solches Grauwertbild ist dann für die Auswertung von bekannten Systemen zur automatischen Zeichenerkennung geeignet.

Das erfindungsgemäße Verfahren gemäß einem bevorzugten Ausführungsbeispiel stellt sich zusammenfassend somit folgendermaßen dar:
1. Detektion und Eliminierung von gestörten Bildpunkten, bei denen aus aufnahmetechnischen Gründen keine Höheninformation ermittelt werden konnte.
2. Ermittlung der relieffreien Objektoberfläche mittels eines langreichweitigen (1- oder 2-dimensionalen) Tiefpaßfilters.
3. Subtraktion des Ergebnisses aus Schritt 2 von Schritt 1. Es resultiert eine Oberfläche mit komplett unterdrückter Krümmung der Originaloberfläche.
4. Selektion der Merkmalsbereiche mittels Schwellwertentscheidung in positiver und negativer Höhenauslenkung abhängig von der gewünschten Detektionsuntergrenze für die zu erkennenden Informationsstrukturen. Es resultiert ein Bild mit allen Bereichen, die Informationsstrukturen enthalten.
5. Unterdrückung von verbleibenden singulären Artefaktstrukturen mittels eines zweidimensionalen nicht-linearen Filters. Die Größe des Filters bestimmt die minimal detektierte Informationsstrukturausdehnung.
6. Zuführung der so vorbereiteten Meßdaten zu einem automatischen Erkennungssystem von Schriftzeichen, Symbolen, etc.

## Patentansprüche

1. Verfahren zum Untersuchen eines Objekts hinsichtlich Informationen, die mittels einer reliefartigen Struktur an dem Objekt vorhanden sind, wobei das Objekt eine Oberfläche mit einer Krümmung mit einem ersten Änderungsgradienten aufweist, und wobei die reliefartige Struktur einen zweiten Änderungsgradienten hat, der höher als der erste Änderungsgradient ist, mit folgenden Schritten:
Bereitstellen (10) einer ursprünglichen Höhendarstellung des Objekts, die einen Höhenverlauf des Objekts wiedergibt, wobei die ursprüngliche Höhendarstellung eine dreidimensionale Oberflächendarstellung des Objekts ist;
Bearbeiten (12, 14) der ursprünglichen Höhendarstellung unter Verwendung von Höhenänderungen aufgrund der reliefartigen Struktur, um eine bearbeitete Darstellung des Objekts zu liefern, wobei der Schritt des Bearbeitens der ursprünglichen Höhendarstellung folgende Teilschritte aufweist:
Filtern der ursprünglichen Höhendarstellung mittels eines Filters, um eine gefilterte Höhendarstellung zu erhalten, wobei durch das Filtern die reliefartige Struktur mit dem zweiten Änderungsgradienten unterdrückt wird und die Krümmung mit dem ersten Änderungsgradienten nicht unterdrückt wird, so dass die gefilterte Höhendarstellung das Objekt mit der Krümmung und ohne die reliefartige Struktur beschreibt; und
Kombinieren der gefilterten Oberflächendarstellung und der ursprünglichen Darstellung, so dass die bearbeitete Darstellung die reliefartige
Struktur ohne die gekrümmte Oberfläche umfasst; und
Auswerten (16) der bearbeiteten Darstellung des Objekts, um die Informationen, die durch die reliefartige Struktur gegeben sind, zu extrahieren, wobei im Schritt des Auswertens (16) eine Muster-Erkennung mit der bearbeiteten Darstellung durchgeführt wird, um Muster, Symbole, Ziffern und/oder Buchstaben in der bearbeiteten Darstellung zu erkennen.

2. Verfahren nach Anspruch 1, bei dem das Filtern mittels eines eindimensionalen oder zweidimensionalen Tiefpaßfilters mit einer Grenzfrequenz durchgeführt wird, um Änderungen mit dem ersten Änderungsgradienten nicht zu unterdrücken und Änderungen mit dem zweiten Änderungsgradienten zu unterdrücken.

3. Verfahren nach Anspruch 1 oder 2, bei dem der Schritt des Kombinierens das Subtrahieren der gefilterten Darstellung von der ursprünglichen Darstellung aufweist.

4. Verfahren nach einem der vorhergehenden Ansprüche, bei dem die bearbeitete Darstellung einer Schwellwertentscheidung unterzogen wird, um die reliefartige Struktur zu selektieren.

5. Verfahren nach einem der vorhergehenden Ansprüche, bei dem das Objekt eine diffus reflektierende Oberfläche aufweist.

6. Verfahren nach einem der vorhergehenden Ansprüche, bei dem die bearbeitete Darstellung ein Grauwertbild ist, wobei verschiedene Grauwerte verschiedenen Höhen entsprechen.

7. Verfahren nach einem der vorhergehenden Ansprüche, bei dem nach dem Schritt des Bereitstellens der ursprünglichen Darstellung folgender Schritt durchgeführt wird:
Eliminieren von Artefakten, für die keine Höheninformationen ermittelt werden konnten.

8. Verfahren nach Anspruch 4, bei dem nach der Schwellwertentscheidung eine Unterdrückung von singulären Artefaktstrukturen durch ein zweidimensionales nichtlineares Filter durchgeführt wird, das so dimensioniert ist, daß lediglich eine reliefartige Struktur mit einer minimalen und/oder maximalen Ausdehnung detektiert wird.

9. Vorrichtung zum Untersuchen eines Objekts hinsichtlich Informationen, die mittels einer reliefartigen Struktur an dem Objekt vorhanden sind, wobei das Objekt eine Oberfläche mit einer Krümmung mit einem ersten Änderungsgradienten aufweist, und wobei die reliefartige Struktur einen zweiten Änderungsgradienten hat, der höher als der erste Änderungsgradient ist, mit folgenden Merkmalen:
einer Einrichtung zum Bereitstellen (10) einer ursprünglichen Höhendarstellung des Objekts, die einen Höhenverlauf des Objekts wiedergibt, wobei die ursprüngliche Höhendarstellung eine dreidimensionale Oberflächendarstellung des Objekts ist; .
einer Einrichtung zum Bearbeiten (12, 14) der ursprünglichen Höhendarstellung unter Verwendung von Höhenänderungen aufgrund der reliefartigen Struktur, um eine bearbeitete Darstellung des Objekts zu liefern, in der die reliefartige Struktur gegenüber der ursprünglichen Höhendarstellung hervorgehoben ist, wobei die Einrichtung zum Bearbeiten wirksam ist, um:
die ursprüngliche Höhendarstellung mittels eines Filters zu filtern, um eine gefilterte Höhendarstellung zu erhalten, wobei durch das Filter die reliefartige Struktur mit dem zweiten Änderungsgradienten unterdrückt wird und die Krümmung mit dem ersten Änderungsgradienten nicht unterdrückt wird, so dass die gefilterte Höhendarstellung das Objekt mit der Krümmung und ohne die reliefartige Struktur beschreibt; und
die gefilterte Oberflächendarstellung und die ursprünglichen Darstellung zu kombinieren; so dass die bearbeitete Darstellung die reliefartige Struktur ohne die gekrümmte Oberfläche umfasst; und
einer Einrichtung zum Auswerten (16) der bearbeiteten Darstellung des Objekts, um die Informationen, die durch die reliefartige Struktur gegeben sind, zu extrahieren, wobei die Einrichtung zum Auswerten wirksam ist, um eine Muster-Erkennung mit der bearbeiteten Darstellung durchzuführen, um Muster, Symbole, Ziffern und/oder Buchstaben in der bearbeiteten Darstellung zu erkennen.

10. Vorrichtung nach Anspruch 9, bei der die Einrichtung zum Bereitstellen (10) einen Lichtschnitt-Triangulator aufweist.

## Claims

1. Method of examining an object regarding information present by means of a relief-like structure on the object, wherein the object has a surface with a curvature with a first change gradient, and wherein the relief-like structure has a second change gradient higher than the first change gradient, comprising:
providing (10) an original height representation of the object reproducing a height course of the object, wherein the original height representation is a three-dimensional surface representation of the object;
editing (12, 14) the original height representation using height changes due to the relief-like structure to provide an edited representation of the object, wherein the step of editing the original height representation comprises following substeps:
filtering the original height representation by means of a filter to obtain a filtered height representation, wherein, by filtering, the relief-like structure with the second change gradient is suppressed, and the curvature with the first change gradient is not suppressed, so that the filtered height representation describes the object with the curvature and without the relief-like structure; and
combining the filtered surface representation and the original representation, so that the edited representation includes the relief-like structure without the curved surface; and
evaluating (16) the edited representation of the object to extract the information given by the relief-like structure, wherein, in the step of evaluating (16), a pattern recognition is performed with the edited representation in order to recognize patterns, symbols, digits, and/or letters in the edited representation.

2. Method of claim 1, wherein the filtering is performed by means of a one-dimensional or two-dimensional lowpass filter with a cut-off frequency, in order to not suppress changes with the first change gradient and to suppress changes with the second change gradient.

3. Method of claim 1 or 2, wherein the step of combining comprises subtracting of the filtered representation from the original representation.

4. Method of one of the preceding claims, wherein the edited representation is subjected to a threshold value decision to select the relief-like structure.

5. Method of one of the preceding claims, wherein the object has a diffusely reflecting surface.

6. Method of one of the preceding claims, wherein the edited representation is a gray scale image, wherein various gray scales correspond to various heights.

7. Method of one of the preceding claims, wherein after the step of providing the original representation the following step is performed:
eliminating artifacts for which no height information could be ascertained.

8. Method of claim 4, wherein after the threshold value decision a suppression of singular artifact structures by a two-dimensional non-linear filter is performed, which is dimensioned so that only a relief-like structure with a minimal and/or maximal expansion is detected.

9. Apparatus for examining an object regarding information present by means of a relief-like structure on the object, wherein the object has a surface with a curvature with a first change gradient, and wherein the relief-like structure has a second change gradient higher than the first change gradient, comprising:
means for providing (10) an original height representation of the object reproducing a height course of the object, wherein the original height representation is a three-dimensional surface representation of the object;
means for editing (12, 14) the original height representation using height changes due to the relief-like structure, to provide an edited representation of the object in which the relief-like structure is highlighted relative to the original height representation, the means for editing being operative to:
filter the original height representation by means of a filter to obtain a filtered height representation, wherein, by the filter, the relief-like structure with the second change gradient is suppressed and the curvature with the first change gradient is not suppressed, so that the filtered height representation describes the object with the curvature and without the relief-like structure; and
combine the filtered surface representation and the original representation, so that the edited representation includes the relief-like structure without the curved surface; and
means for evaluating (16) the edited representation of the object to extract the information given by the relief-like structure, the means for evaluating being operative to perform a pattern recognition with the edited representation to recognize patterns, symbols, digits, and/or letters in the edited representation.

10. Apparatus of claim 9, wherein the means for providing (10) comprises a light-section triangulator.

## Revendications

1. Procédé pour examiner un objet quant à des informations qui sont présentes sur l'objet au moyen d'une structure en forme de relief, l'objet présentant une surface avec une courbure avec un premier gradient de variation et la structure en forme de relief ayant un deuxième gradient de variation qui est supérieur au premier gradient de variation, aux étapes suivantes consistant à :
préparer (10) une représentation de hauteur originale de l'objet qui reproduit une évolution de hauteur de l'objet, la représentation de hauteur originale étant une représentation de surface tridimensionnelle de l'objet ;
traiter (12, 14) la représentation de hauteur originale à l'aide de variations de hauteur sur base de la structure en forme de relief, pour fournir une représentation traitée de l'objet, l'étape de traitement de la représentation de hauteur originale présentant les étapes partielles suivantes consistant à :
filtrer la représentation de hauteur originale au moyen d'un filtre, pour obtenir une représentation de hauteur filtrée, par la filtration étant supprimée la structure en forme de relief au deuxième gradient de variation et n'étant pas supprimée la courbure au premier gradient de variation, de sorte que la représentation de hauteur filtrée décrive l'objet avec la courbure et sans la structure en forme de relief ; et
combiner la représentation de surface filtrée et la représentation originale, de sorte que la représentation traitée comprenne la structure en forme de relief sans la surface courbée; et
évaluer (16) la représentation traitée de l'objet, pour extraire les informations qui sont données par la structure en forme de relief, à l'étape d'évaluation (16) étant effectuée une identification de modèle avec la représentation traitée, pour identifier des modèles, des symboles, des chiffres et/ou des lettres dans la représentation traitée.

2. Procédé selon la revendication 1, dans lequel la filtration s'effectue au moyen d'un filtre passe-bas unidimensionnel ou bidimensionnel avec une fréquence limite, afin de ne pas supprimer les variations au premier gradient de variation et pour supprimer les variations au deuxième gradient de variation.

3. Procédé selon la revendication 1 ou 2, dans lequel l'étape de combinaison présente la soustraction de la représentation filtrée de la représentation originale.

4. Procédé selon l'une des revendications précédentes, dans lequel la représentation traitée est soumise à une décision de valeur de seuil, pour sélectionner la structure en forme de relief.

5. Procédé selon l'une des revendications précédentes, dans lequel l'objet présente une surface réfléchissante de manière diffuse.

6. Procédé selon l'une des revendications précédentes, dans lequel la représentation traitée est une image de valeurs de gris, différentes valeurs de gris correspondant à différentes hauteurs.

7. Procédé selon l'une des revendications précédentes, dans lequel est effectuée, après l'étape de préparation de la représentation originale, l'étape suivante consistant à :
éliminer les artifices pour lesquels n'ont pas pu être déterminées des informations de hauteur.

8. Procédé selon la revendication 4, dans lequel est effectuée, après la décision de valeur de seuil, une suppression de structures à artifices singulières par un filtre non linéaire bidimensionnel qui est dimensionné de sorte que seule soit détectée une structure en forme de relief avec une extension minimale et/ou maximale.

9. Dispositif pour examiner un objet quant à des informations qui sont présentes sur l'objet au moyen d'une structure en forme de relief, l'objet présentant une surface avec une courbure avec un premier gradient de variation et la structure en forme de relief ayant un deuxième gradient de variation qui est supérieur au premier gradient de variation, aux caractéristiques suivantes :
un dispositif destiné à préparer (10) une représentation de hauteur originale de l'objet qui reproduit une évolution de hauteur de l'objet, la représentation de hauteur originale étant une représentation de surface tridimensionnelle de l'objet ;
un dispositif destiné à traiter (12, 14) la représentation de hauteur originale à l'aide de variations de hauteur sur base de la structure en forme de relief, pour fournir une représentation traitée de l'objet dans laquelle la structure en relief est mise en évidence par rapport à la représentation de hauteur originale, le dispositif destiné à traiter étant actif pour :
filtrer la représentation de hauteur originale au moyen d'un filtre, pour obtenir une représentation de hauteur filtrée, par la filtration étant supprimée la structure en forme de relief au deuxième gradient de variation et n'étant pas supprimée la courbure au premier gradient de variation, de sorte que la représentation de hauteur filtrée décrive l'objet avec la courbure et sans la structure en forme de relief ; et
combiner la représentation de surface filtrée et la représentation originale, de sorte que la représentation traitée comprenne la structure en forme de relief sans la surface courbée; et
un dispositif destiné à évaluer (16) la représentation traitée de l'objet, pour extraire les informations qui sont données par la structure en forme de relief, le dispositif destiné à évaluer étant actif pour effectuer une identification de modèle avec la représentation traitée, pour identifier des modèles, des symboles, des chiffres et/ou des lettres dans la représentation traitée.

10. Dispositif selon la revendication 9, dans lequel le dispositif destiné à préparer (10) présente un triangulateur de coupe optique.
